Europäisches Patentamt

European Patent Office

Office européen des brevets

(19)

(11)  **EP 1 280 046 A1**

## (12)  EUROPEAN PATENT APPLICATION
published in accordance with Art. 158(3) EPC

(43) Date of publication:
  **29.01.2003 Bulletin 2003/05**

(21) Application number: **01915819.5**

(22) Date of filing: **27.03.2001**

(51) Int Cl.⁷: **G06F 3/023**, H04M 1/00

(86) International application number:
  **PCT/JP01/02457**

(87) International publication number:
  **WO 01/073535 (04.10.2001 Gazette 2001/40)**

(84) Designated Contracting States:
  **AT BE CH CY DE DK ES FI FR GB GR IE IT LI LU
  MC NL PT SE TR**
  Designated Extension States:
  **AL LT LV MK RO SI**

(30) Priority: **27.03.2000 JP 2000086887**

(71) Applicants:
  • **Ohta, Kazuhiko
    Osaka-shi, Osaka 552-0015 (JP)**

  • **Kaneda, Yojiro
    Oki-gun, Shimane 685-0007 (JP)**

(72) Inventor: **KANEDA, Yojiro
    Saigo-cho, Oki-gun, Shimane 685-0007 (JP)**

(74) Representative:
  **Leson, Thomas Johannes Alois, Dipl.-Ing.
  Tiedtke-Bühling-Kinne & Partner GbR,
  TBK-Patent,
  Bavariaring 4
  80336 München (DE)**

## (54)  INPUT METHOD FOR CHARACTERS AND THE LIKE

(57)    There is provided a character input method and input device which make it possible to carry out input of characters and/or symbols easily and quickly while viewing a display panel. In the method of input of characters and/or symbols, the characters are classified into at most n of small groups consisting of at most n of characters, respectively and the respective small groups are assigned to at most n of small group selection switches. When one of the small group selection switches is turned on, at most n of characters and/or symbols in the small group which are assigned to the selection switches are displayed in the arrangement corresponding to the character decision switches. Then the character and /or symbol are input by turning on the character decision switch corresponding to the character to be selected.

FIG. 1

## Description

### TECHNICAL FIELD

The present invention relates to an input method and input device capable of easy and quick input of characters and/or symbols.

### BACKGROUND ART

Recently cellular phones have spread rapidly and further it became possible to transmit electronic mail by the cellular phones.

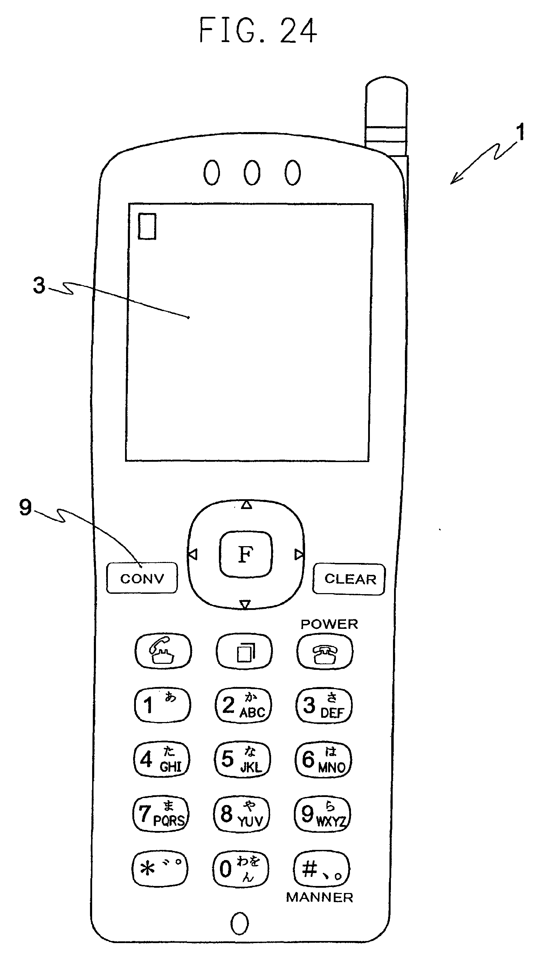

For input of characters (or symbols) in such cellular phones, as shown in Fig. 24, characters and symbols which are classified into some groups are assigned to ten of input switches of from 0 to 9 (so-called "Ten-Key Arrangement") and are input by pressing the input switches by the number of times corresponding to the order of the characters and symbols arranged in each group.

In such a method, for example, for input of "もじにゅうりょ く", it is necessary to press a button of the "ま" family five times (input of the character "も"); to press a sonant button 8 after pressing a button of the "さ" family two times (input of the character "じ"); to press a button of the "や " family five times after pressing a button of the "な" family two times (input of the character "にゅ"); to press a button of the "あ" family three times (input of the character "う"); to press a button of the "や" family six times after pressing a button of the "ら" family two times (input of the character "りょ"); and further to press a button of the "か" family three times (input of the character "く"). Thus pressing 29 times in total is required, though the number of pressing times varies depending on a type of cellular phone. In order to convert to Chinese characters (kanji), it is necessary to press a Chinese character conversion button 9. Thus for input of a Japanese character, pressing the buttons ten times at most ("ぴょ", etc.) is necessary.

Depending on a type of cellular phone, a small character button (not illustrated) is provided and "にゅ" is input by pressing buttons five times (the button of the "な" family is pressed two times to input the character "に" and then after the button of the "や" family is pressed two times, the small character button is pressed once to input a small character "ゅ"). In that case, to input "もじにゅうりょく", the buttons are pressed 25 times, but an another function button, that is, the small character button is required and it takes an unexpected period of time to select the small character button.

Also for input of the Roman alphabets, for example, for input of "enter", the button (DEF) is pressed five times (input of the small letter "e"), the button (MNO) is pressed five times (input of the small letter "n"), the button (TUV) is pressed four times (input of the small letter "t"), the button (DEF) is pressed five times (input of the small letter "e"), and further the button (OQRS) is pressed seven times (input of the small letter "r") (the total pressing times are 26). In case of another input system having a small character button, "enter" can be input by pressing the buttons 16 times, but the small character button is separately required. Moreover, in input of the Roman alphabets, it is not easy for those who are not familiar with English, etc. to memorize arrangement of the alphabets classified into some groups.

Most difficult is to memorize symbols classified into groups.

As mentioned above, in the input methods and devices of cellular phones which are now used, it is necessary to press buttons many times and a skill is required. Also since priority is given to the input of numerals, in many cases, the position of the button need to be identified every time when characters are input.

In order to improve this point, an input method of characters with a two-contact type seesaw key but not with Ten-Key Arrangement is disclosed in JP 2000-47791 A. This is a method of moving a cursor on displayed characters up to an intended character by pressing a seesaw key and then making a decision to input the character.

However according to that input method, the Ten-Key Arrangement is not used but it takes time to move the cursor with the seesaw key, and further it is unexpectedly difficult to stop the cursor at the intended position. Also the number of characters arranged on the display are many, which makes it difficult to make sure of the character which has been already input. It is a matter of course that the Ten-Key Arrangement does not become unnecessary.

Such being the case, a new development is demanded in the input of characters and in addition, in order to afford various functions such as a function of playing a game to a cellular phone, function keys for such functions are provided or many functions are assigned to the existing buttons. Thus the number of buttons are increased or operation becomes complicated.

There have been proposed an input emulator and input method in which the number of such function keys and buttons (keys) is decreased, Japanese hiragana characters of from the "あ " family to the "わ" family are assigned to ten input keys, and thus two sets of input keys, namely five input keys per each set are arranged and five hiragana characters are assigned to one set of input keys (JP 2001-5596 A).

In that proposal, the number of input keys can be decreased and the number of pressing operations can be decreased, but the keys are arranged in two rows symmetrical to each other and the operation is based on the assumption that the input is made by both hands. Also only few kinds of characters are displayed. For example, in order to input "にゅ", first after selecting the " な" family from the Ten-Key Arrangement (first pressing), the character "に" is decided (second pressing) and further after selecting the "や" family (third pressing), a sonant/syllabic nasal key is pressed two times to decide the small character "ゅ" (fourth and fifth pressing). Thus to input characters including a sonant, syllabic nasal, small character, etc., many pressing operations are still required. It may be said in this connection that in the present invention explained infra, a minimum number of pressing operations is two times for input of the characters "にゅ".

An object of the present invention is to provide an input method and device capable of input of characters, symbols and numerals so easily with few operations.

DISCLOSURE OF INVENTION

Namely, the first of the present invention relates to an input method of characters and/or symbols (hereinafter explained represented by the "character" unless otherwise specified), in which the number of characters are at most n and the characters are classified into at most n of small groups and the respective small groups are assigned to at most n of small group selection switches. When one of the selection switches is turned on, characters assigned to the selection switch are displayed on the corresponding at most n of character decision switches. Then the character is input by turning on the character decision switch corresponding to the character to be selected.

In this method, input is carried out more easily by displaying characters which are now selectable. For example, the character can be selected even without identifying the selection switch or character decision switch with eyes because representative characters (or all characters when the number of characters are small) of the above-mentioned small groups consisting of at most n of characters are displayed corresponding to the selection switches and by turning on the small group selection switch including the character to be selected, each character in the small group is displayed corresponding to the character decision switches.

When considering that it becomes easy for those who are familiar with a conventional input method to carry out operations, it is preferable that the number n of selection switches and character decision switches is ten, respectively, preferably two sets of switches including five switches each (ten switches) and five switches per each set are arranged crosswise.

Further when the numerals of from 0 to 9 are assigned to ten switches, conventional Ten-Key Arrangement can be made unnecessary.

The switches are preferably seesaw pressing switches having five contacts.

The above-mentioned input method is suitable for cellular phones and in addition, can be used for a terminal device for input of characters and symbols.

From now on there appear many mobile communication means such as cellular phones which receive and display moving pictures and home pages, and thus a display is demanded to have a large area. In that case, it becomes important that the input means is as simple as possible and the number of keys is as few as possible.

Therefore the second of the present invention relates to an input method and input device which can decrease the number of keys (input keys) and make input operations easy.

Namely, the present invention relates to an input method of characters and/or symbols classified into small groups, sets of small groups, medium groups and sets of medium groups according to the classification mentioned below. First the medium group is selected from the sets of medium groups by a medium group selection switch. Then one set of the sets of small groups in the selected medium group is selected by a selection switch for selecting the sets of small groups, one group of the small groups comprising characters and/or symbols is selected from the selected set of small groups by a small group selection switch and then the intended character and/or symbol to be input in the selected small group are decided by a character decision switch.

Small groups: Groups consisting of at most m of characters and/or symbols, respectively.

Sets of small groups: A set comprising classified small groups having relation with each other. Representative characters and/or symbols representing each small group may be determined beforehand.

Medium groups: Groups consisting of at most m of sets of small groups, respectively.

Sets of medium groups: A set comprising classified medium groups having relation with each other.

In the above-mentioned method, sight coincides with input operations and the input operations are carried out more easily because the medium groups are displayed corresponding to the arrangement of the medium group selection switches; by turning on the medium group selection switch, at most m of representative characters and/or representative symbols of each small group are displayed corresponding to the selection switches for selecting the sets of small groups; by turning on the selection switch for selecting the sets of small groups, the small groups in the selected set of small groups are displayed corresponding to the arrangement of the small group selection switches; by turning on the small group selection switch, characters and/or symbols in the selected small group are displayed corresponding to the arrangement of the character decision switches; and then the intended character and/or symbol is input by turning on the character decision switch.

For the above-mentioned input method, preferred is a character and/or symbol input device which comprises:

a selection switch comprising at most five switches for selecting a medium group and small group,

one set of switch sets having five switches arranged crosswise for selecting a set of small groups and for deciding a character,

means for displaying the medium groups comprising representative characters and/or representative symbols consisting of at most five of small groups corresponding to the medium group selection switches in the arrangement corresponding to the medium group selection switches or in the arrangement corresponding to the direction in which the medium group selection switch is pushed,

means for displaying at most five of groups comprising small groups in the selected medium group in the arrangement corresponding to the switches for selecting a set of small groups,

means for displaying the selected set of small groups in the arrangement corresponding to the small group selection switches or in the arrangement corresponding to the direction in which the small group selection switch is pushed,

means for displaying at most five of characters and/or symbols of the selected small group in the arrangement corresponding to the character decision switches, and

means for displaying the selected character and/or symbol by turning on the character decision switch corresponding to the intended character and/or symbol to be input.

In that case, it is possible that

the switch for selecting the medium group and small group is a pressing switch, and the medium group and small group are selected alternately by turning on the switch by turns;

the switch for selecting the medium group and small group is a lever switch, and the medium group and small group are selected alternately by turning the lever to a specific direction;

the sets of switches are commonly used for the selection of the set of small groups and for the decision of a character; or

the sets of switches are commonly used for the selection of the medium group, for the selection of the set of small groups, for the selection of small group and for the decision of a character.

It is desirable that the sets of switches are commonly used at least for the selection of the set of small groups and for the decision of a character.

In the second invention, the numerals of from 0 to 9 may be assigned to the switches like the first invention and it is preferable that a seesaw pressing switch having five contacts is used.

BRIEF DESCRIPTION OF DRAWINGS

Fig. 1 is a diagrammatic plan view of one embodiment of a cellular phone having a device of the first invention.

Fig. 2 is a diagrammatic plan view of another embodiment of a cellular phone having a switch set key usable in the first invention.

Fig. 3 is a display of the "あ" family for input by the method of the first invention.

Fig. 4 is a display of the "か" family for input by the method of the first invention.

Fig. 5 is a display of the "さ" family for input by the method of the first invention.

Fig. 6 is a display of the "た" family for input by the method of the first invention.

Fig. 7 is a display of the "な" family for input by the method of the first invention.

Fig. 8 is a display of the "は" family for input by the method of the first invention.

Fig. 9 is a display of the "ま" family for input by the method of the first invention.

Fig. 10 is a display of the "や" family for input by the method of the first invention.

Fig. 11 is a display of the "ら" family for input by the method of the first invention.

Fig. 12 is a display of the "わ" family for input by the method of the first invention.

Fig. 13 is a flow chart showing a flow of process for input of a character "お" by the method of the first invention.

Fig. 14 shows a change in a display for input of a character "にゅ" by the method of the first invention.

Fig. 15 shows a change in a display for input of a character "Q" by the method of the first invention.

Fig. 16 is a diagrammatic block diagram of an electronic processing device suitable for carrying out the method of the first invention.

Fig. 17 is a diagrammatic plan view of an embodiment of a horizontal type cellular phone having a device of the first invention.

Fig. 18 is a diagrammatic left-side view of an embodiment of a cellular phone having a device of the first invention at that side.

Fig. 19 is a diagrammatic right-side view of an embodiment shown in Fig. 18.

Fig. 20 is a diagrammatic plan view of an embodiment of a cellular phone having a device of the second invention.

Fig. 21 is a diagrammatic plan view of an embodiment of an initial display of an input mode of the second invention.

Fig. 22 shows a change in a display for input of a character "にゅ" by the method of the second invention.

Fig. 23 is a diagrammatic plan view of an embodiment of an initial display of an input mode of Japanese hiragana characters of the second invention.

Fig. 24 is a diagrammatic plan view of a cellular phone having a conventional input device.

BEST MODE FOR CARRYING OUT THE INVENTION

Examples of groups of characters directed by the present invention are Japanese "hiragana" and "katakana" characters, Roman "alphabets", characters of other languages (Russian, Arabic, etc.) and the like. In case of the languages, in which Chinese characters are used, such as Japanese, Chinese and Korean (Hangul alphabets), after input of "hiragana", "katakana" or "alphabet" characters, conversion into a Chinese character is carried out with a key for conversion into a Chinese character. For input of symbols, any symbols such as "、", "。", ";", ":", "+" and "-" may be used. For selecting the character group, symbol group or numeral group, a character/symbol/numeral selection button (key) may be provided.

First, example of input of Japanese "hiragana" characters according to the first invention is explained below by using drawings.

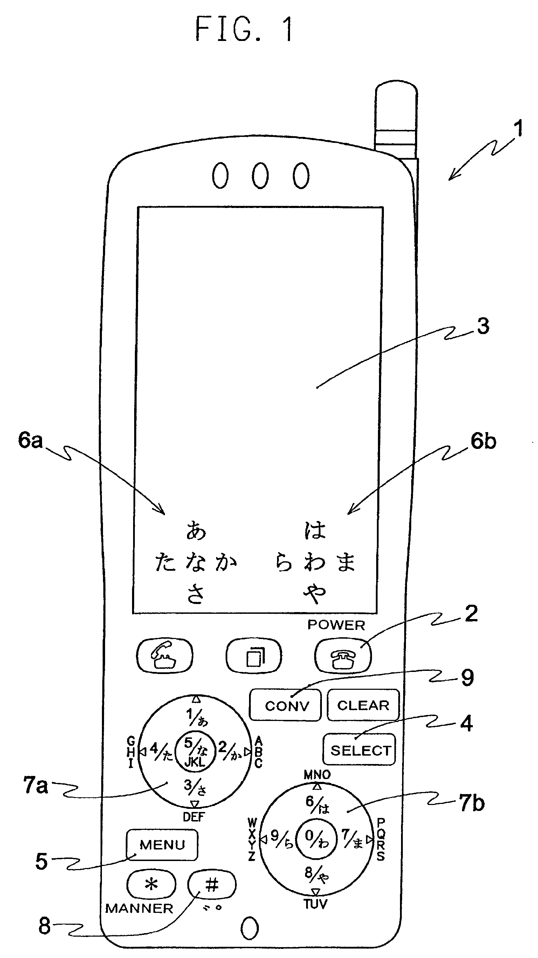

Fig. 1 is a diagrammatic plan view of one embodiment of a cellular phone provided with an input method and input device of the present invention. As the cellular phone 1, there are a variety of types in addition to a conventional one shown in Fig. 24. Explanation below is made narrowing down to function keys (input switches) necessary for input of characters.

This embodiment is achieved by a character input device comprising:

two sets of switch sets having five switches each arranged crosswise for selecting the small group (and for character decision),
means for displaying at most ten of representative characters (or all characters) corresponding to each small group selection switch of the switch sets in an arrangement corresponding to the selection switches,
means for displaying, by turning on the selection switch for the small group including the character to be selected, each character belonging to the small group corresponding to the small group selection switch turned on in the arrangement corresponding to the character decision switches, and
means for displaying the character decided by turning on the decision switch for the character to be input.

The "small group" of the first invention is a set of characters and/or symbols, the number of which is at most the number of character decision switches (at most n of switches, preferably ten switches). For example, ten characters, "あ", "い", "う", "え" and "お" and small char-

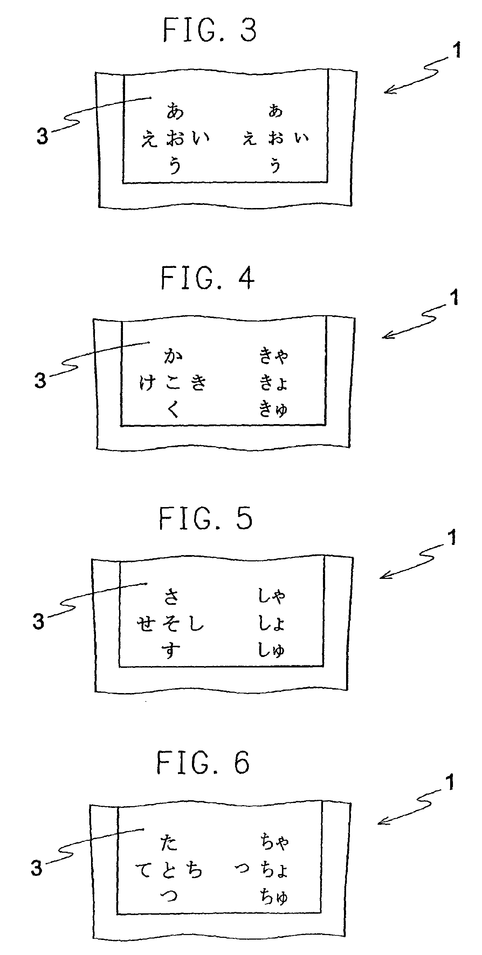

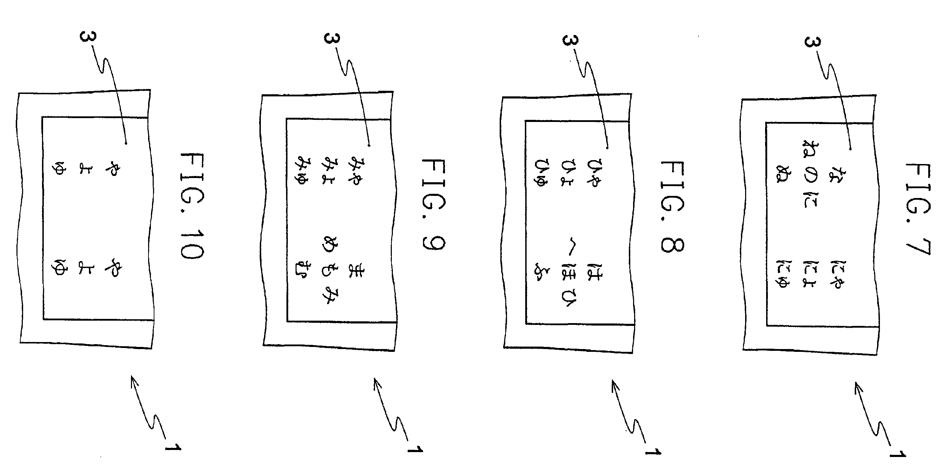

acters "あ", "い", "う", "え" and "お" belong to the small group of the "あ" family (Fig. 3), and eight characters, "な", "に", "ぬ", "ね", "の", "にゃ", "にゅ" and "にょ" belong to the small group of the "な" family (Fig. 7).

Concretely first by turning on the power button 2 of the cellular phone 1, an initial indication appears on the display 3. Then by pressing the selection button 4 by turns, characters and symbols which can be input are displayed in the order of "numeral", "hiragana", "katakana", "alphabet" and "symbol" on the display 3. It is a matter of course that a list of input modes may be displayed by the selection button 4 or the menu button 5.

In this case, the "hiragana" input is selected. When the "hiragana" input is selected, as shown in Fig. 1, on the left side of the display 3 there appears an indication 6a in which characters "あ", "か", "さ" and "た" are arranged clockwise and a character "な" is arranged at the center, and further on the display 3 there appears an indication 6b in which characters "は", "ま", "や" and "ら" are arranged clockwise and a character "わ" is arranged at the center. Those indications 6a and 6b correspond to the arrangements of the pressing buttons (small group selection switches) of the switch set keys 7a and 7b, respectively.

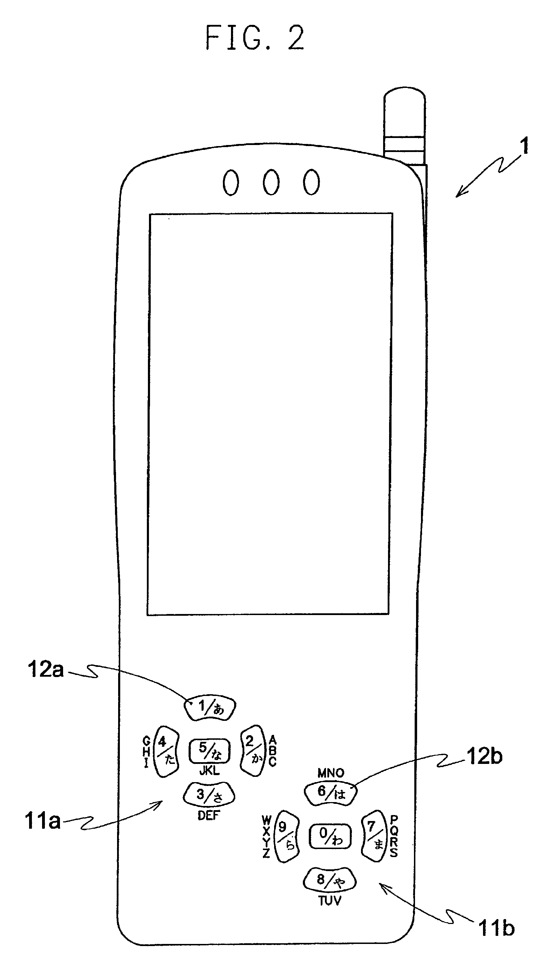

In this embodiment, hiragana characters of from the "あ" family to "わ (を,ん)" are classified into ten groups like conventional classification. A point basically different from conventional classification is that in case of the conventional classification in which Ten-Key Arrangement are used, the arrangement of the Ten-Key Arrangement is decided according to JIS and the classification is based on the numeral buttons, but in the embodiment of the present invention, since importance is placed on easiness of a character input, characters and symbols are classified into two sets comprising five groups, respectively and the pressing buttons (small group selection switch) of the respective button set keys 7a and 7b are arranged crosswise. In Fig. 1, for each button set, a five-contact type seesaw key having four contacts crosswise in total and one contact at the center is employed. It is a matter of course that as shown in Fig. 2, the button sets 11a and 11b comprising independent five buttons 12a and 12b, respectively may be used. By such an arrangement, the following operations, that is, selection of intended character becomes very easy.

To each small group (from the "あ" family to the "わ" family) of "hiragana" character are assigned characters corresponding to the number of pressing buttons at most (that is, ten buttons) (Refer to Fig. 3 to Fig. 12). In this embodiment, as shown in Fig. 3, characters "あ", "い", "う", "え" and "お" of the "あ" family are assigned clockwise to the five pressing buttons on the switch set key 7a, and small characters "あ", "い", "う", "え" and "お" are assigned clockwise to the five pressing buttons on the switch set key 7b. Examples of each character of from the "か" family to the "わ" family are shown in Fig. 4 to Fig. 12, but the assignment and arrangement are not limited to them.

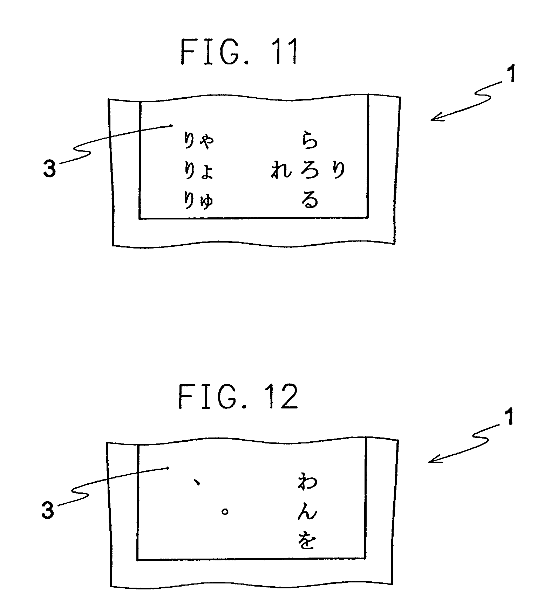

It is further convenient to assign the symbols " ", "｡ " and the like which are used frequently to the "わ " family as shown in Fig. 12.

The reason why characters are assigned clockwise in order is that it is easy for the Japanese to become familiar with the arrangement made in the order of vowels "あ", "い", "う", "え" and "お", but the arrangement is not limited particularly to that order.

The non-restricted characteristic points of the above-mentioned assignment and arrangement are as follows.

(1) Though in conventional input method, characters such as "きゃ", "きゆ" and "きょ" are input, for example, by dividing "きゃ" into "き" and "や", those characters are treated as one character, respectively.

As a result, the number of pressing operations necessary for input can be decreased greatly.

(2) To the switch set key 7a are assigned capital characters of from the "あ " family to the "な " family (same as in the display), and to the switch set key 7b are assigned capital characters of from the "は " family to the "わ " family (same as in the display).

By such an arrangement, capital characters which are frequently input can be selected just after pressing the corresponding button, with the same finger.

(3) Characters such as "きゃ", "きゆ" and "きょ" are arranged in the order of vowels.

The arrangement of characters are made in the order of vowels because when an input skill advances, the arrangement in the order of vowels is memorized by fingers (blind touch).

In the examples of assignment of characters shown in Fig. 3 to Fig. 12, conversion to a sonant ("が" and the like) and a p-sound (for example, "ぱ" and the like) is carried out in the same manner as before by carrying out input of a character "か゛" and then pressing a sonant/p-sound button 8. In this case, too, a character "ぎゃ" may be input by selecting one character "きゃ゛" and then pressing the sonant button 8.

Though it is not illustrated, characters to be assigned to each of the family (character group) may be five capital characters (for example, from "か " to "こ") and five sonants (from "が " to "ご"). In this case, "ぎゃ" may be input by input of the character "ぎ" and then the small character "ゃ". With respect to p-sounds, they may be assigned to the "わ " family or a specific p-sound button may be provided.

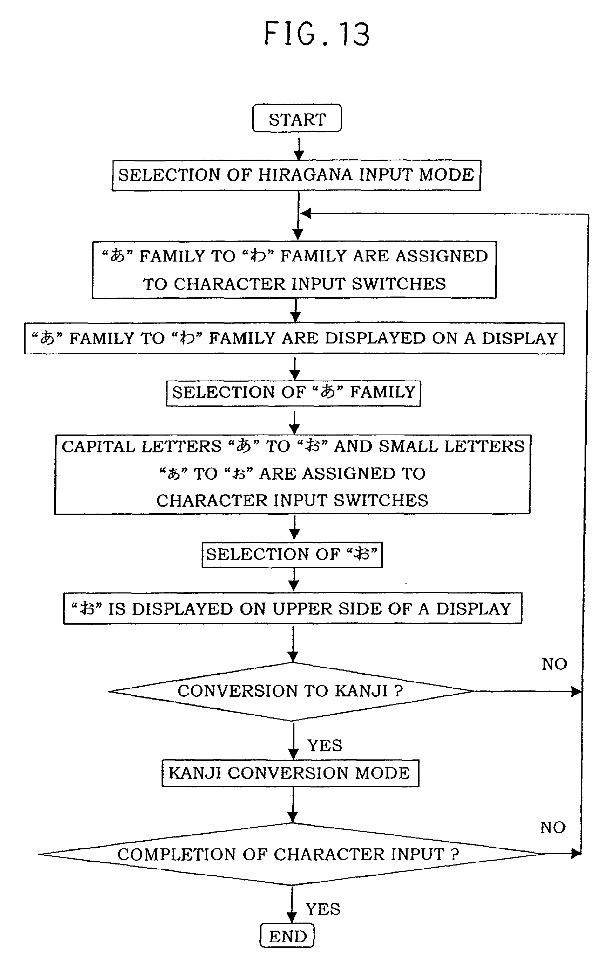

In the first invention, for example, in Fig. 1, when the pressing button (position) of the "あ" family of the switch set key 7a is pressed, each pressing button is changed corresponding to ten characters assigned to the "あ " family, and an indication shown in Fig. 3 appears on the display 3. When the intended character is "お", it is input by pressing the center of the switch set key 7a. The flow of these operations is shown in Fig. 13.

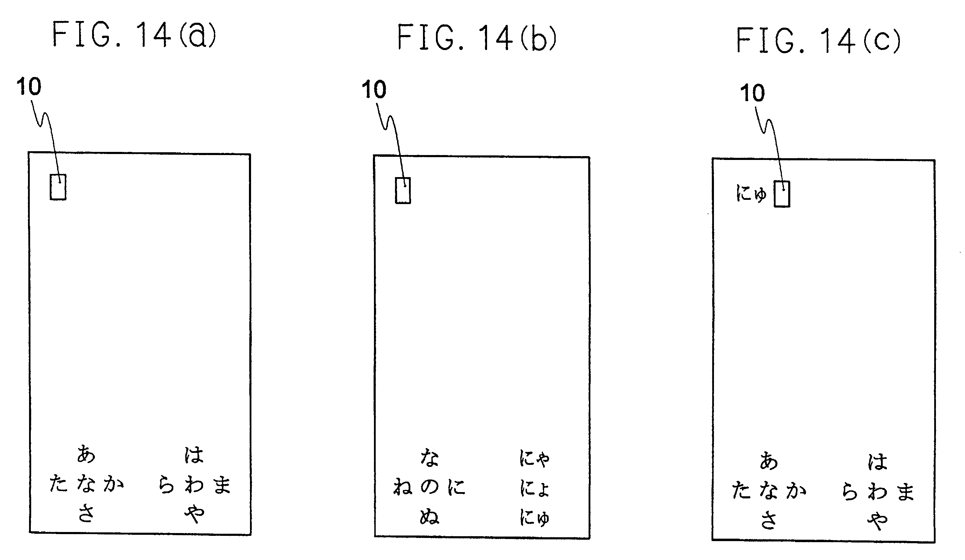

Also when the intended character is "にゅ", it can be input easily by the procedures shown in Fig. 14. Namely, by selecting the "hiragana" character with the selection button 4, an indication of Fig. 14(a) appears on the display. Then by selecting the "な " family, an indication of the display changes to that of Fig. 14(b). As shown in Fig. 14(c), "にゅ" appears before the cursor 10 on the upper left-side of the display, and the input display on the lower side returns to an initial (waiting) indication.

In the conventional character input method, it is necessary to press the button of the "あ " family five times to input the character "お", and to input the character "にゅ", the button needs to be pressed five times or seven times. However in the present invention, any of those two characters can be input only by pressing two times. In addition, since the character to be input appears on the display 3, it is easy for the operator to judge which pressing button (which position of the set key) should be pressed. Therefore even those who are not familiar with input operations can select and input characters easily and quickly.

In order to input the characters "もじにゅうりょく" in this embodiment, the number of required pressing operations is only 13 times (for input of the character "じ", a sonant button is pressed once), and therefore input can be made only by pressing not more than a half times as compared with the conventional input method. In order to convert those characters to kanji characters, the conversion button 9 may be pressed.

With respect to other functions, for example, a conventional clear key for correction and a conventional cursor transfer key can be used.

The input method of Japanese "katakana" characters is the same as that of "hiragana" characters except that the "katakana" input mode is selected by the selection button 4. In the same manner as the conversion to kanji characters, a "hiragana" character may be converted to a "katakana" character by pressing the conversion button 9 after input of the "hiragana" character.

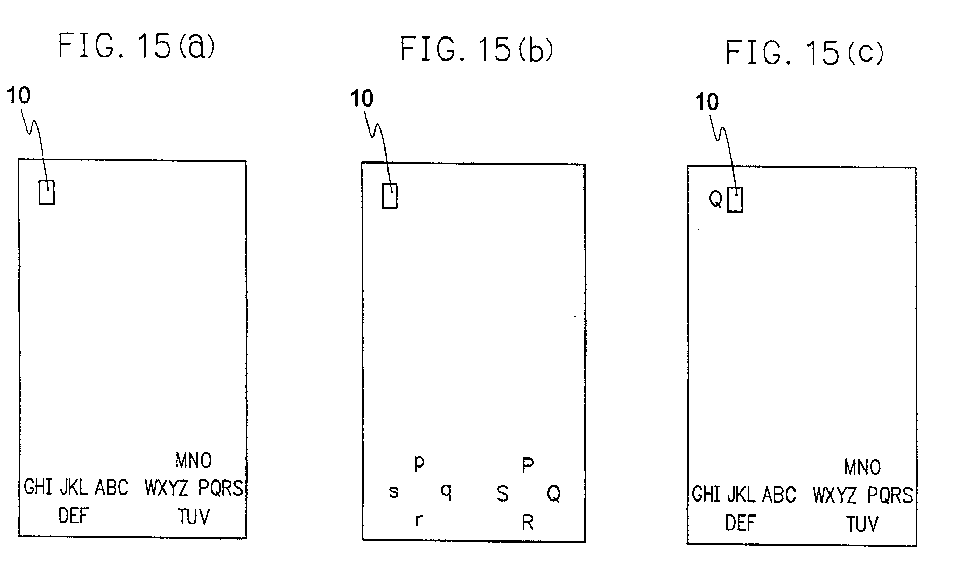

With respect to the Roman "alphabets", capital letters and small letters of from A to Z and further frequently used symbols such as ",", ".", "#" and "/" may be classified into ten groups. Non-restricted example of one embodiment of such a classification, assignment and arrangement of alphabets is shown in Fig. 15 by input of the letter "Q". The assignment of alphabets to the pressing buttons which is shown in Fig. 15(a) corresponds in principle to the assignment made on the existing Ten-Key Arrangement. However because of a difference of the input method, the arrangement and input method of alphabets shown in Fig. 15(a) and (b) follow those for the above-mentioned "hiragana" characters.

Procedures for input of the letter "Q" are explained concretely according to Fig. 1 and Fig. 15. By selecting the alphabet input mode with the selection button 4, the alphabets are ready to be input, and an indication on the display 3 changes to that shown in Fig. 15 (a). Then by pressing the "PQRS" button including the letter "Q" (on the right side of the switch set key 7b), capital letters and small letters of PQRS are assigned to the switch set keys 7a and 7b, respectively and the alphabets (capital letters and small letters of PQRS) appear on the display 3 corresponding to such an assignment (Refer to Fig. 15(a)). Then by pressing the "Q" switch (right side of the switch set key 7b), the letter "Q" is decided and appears at the cursor on the upper left-side of the display 3, and the display returns to the initial (waiting) indication (Refer to Fig. 15(c)).

The classification of the alphabets into groups and the arrangement on the pressing buttons are not limited particularly. In addition to the example shown in Fig. 15, the alphabets may be assigned to the melody of a familiar song "Song of ABC". Namely, "ABCD", "EFG", "HIJK" and "LMN" may be assigned clockwise at four positions crosswise on the switch set 7a (center button is not used), and "OPQR", "STU", "VW" and "XYZ" may be assigned clockwise at four positions crosswise on the switch set 7b (center button is not used).

For input of letters "enter" according to that embodiment, one letter can be input only by pressing two times and therefore the letters "enter" can be input only by pressing ten times. Further since even those who are not familiar with English can make input operations viewing the display, input can be carried out very easily and accurately.

In that embodiment, since input of Japanese characters and numerals is carried out together, the above-mentioned classification into groups (n=8) and arrangement of buttons are employed. However when considering input of only alphabets, the number of groups (n) may be from 4 to 10 or the assignment of the groups to the input switches and the arrangement of the input switches may be optionally decided according to the number of groups.

The input method of the present invention exhibits its effect particularly in case of input of symbols. Since there are many symbols, those symbols cannot be assigned to the pressing buttons and it is difficult to memorize those symbols one by one. However according to the present invention, classified symbols appear on the display like the input of "hiragana" characters, and which key should be pressed is indicated. Therefore input operations become very easy. Input operations are the same as those in the input of "alphabets".

According to the present invention, characters and symbols can be input without using conventional Ten-Key Arrangement and further in order to eliminate Ten-Key Arrangement, numerals may be assigned to ten pressing buttons of the switch set key 7a and 7b (Refer to Fig. 1). In case of a device such as a cellular phone, a major object of which is to input phone numbers, it is convenient to set the numeral mode as the first input mode.

Also there is a case where numerals have to be input during the input of characters ("hiragana" characters, "katakana" characters and alphabets) and symbols (for example, time, address, electronic mail address, home page address, and the like). In order to input such a few numerals, setting may be so designed that the numeral can be input by pressing for a given period of time (1.5 to 2 seconds) the key to which the numeral is assigned (for example, the "3/さ" key when the numeral 3 is intended to be input).

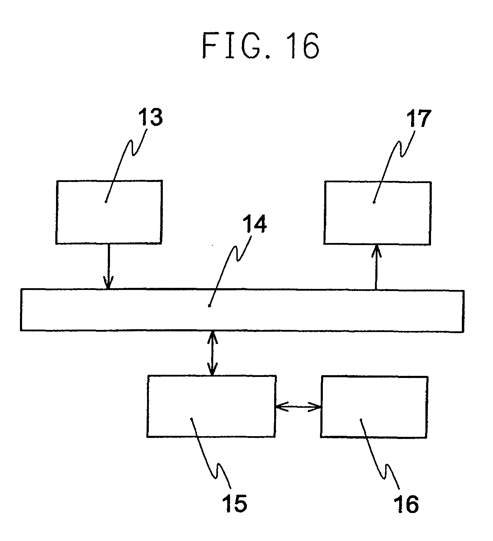

The character input of the present invention can be achieved by the electronic processing device shown in the block diagram of Fig. 16. In Fig. 16, numeral 13 represents an input means having the character input device of the present invention, numeral 14 represents an input/output interface, numeral 15 represents a central processing unit, numeral 16 represents a memory device and numeral 17 represents a display means.

Mentioned above is mainly the explanation of the input method of the Japanese characters, but the input method can be applied similarly to other languages than Japanese and English.

Further the five-contact keys which are used on the input device of the present invention (7a and 7b of Fig. 1 and 11a and 11b of Fig. 2) are the same as those used as operation buttons and controllers of television set, video recorder, game machine and the like, and therefore can be used as controllers for game and audio and visual softwares which are expected to be transmitted to mobile communication devices such as a cellular phone and mobile.

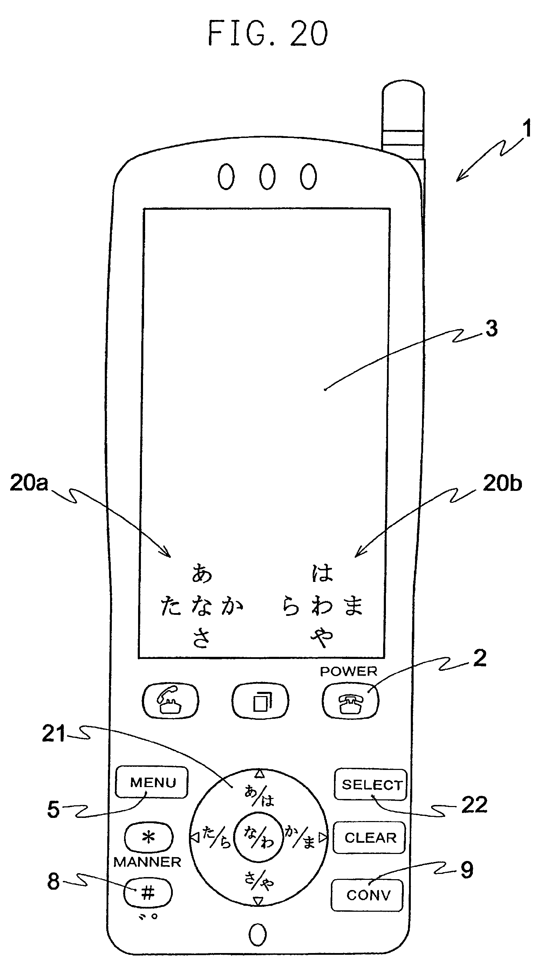

Particularly in order to play games and see pictures with mobile terminals, an area of display is demanded to be increased. According to the input method and input device of the present invention, an operation panel can be made compact and therefore an area of the display can be increased (Compare Fig. 20 with Figs. 1 and 2).

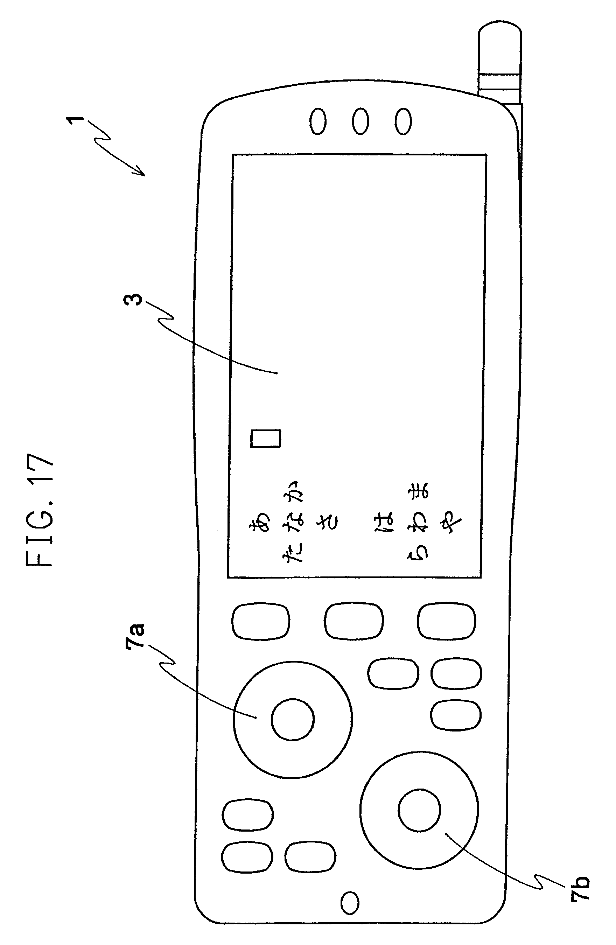

For input of a long mail or for playing games and operating pictures, there is a case where it is convenient to use a terminal device horizontally. As shown in Fig. 17, according to the method and device of the present invention, operations can be carried out without a feeling of inconvenience by leaving the arrangement of the panel as it is or by changing the directions of the switch set keys.

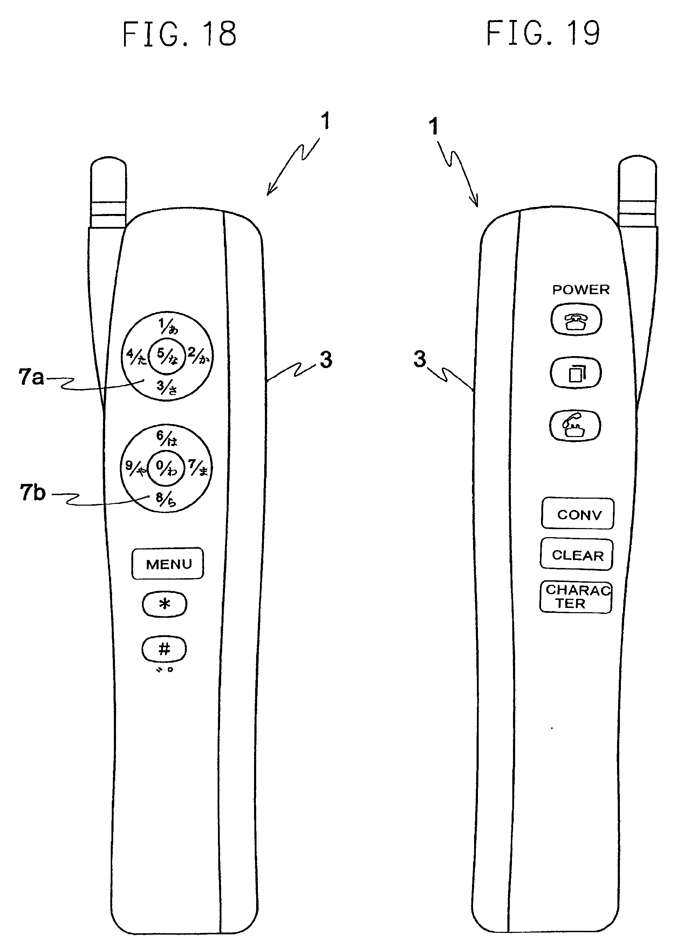

Further as shown in Fig. 18, when disk type small seesaw keys are used for the switch set keys 7a and 7b, those keys can be deposited on the side of the cellular phone. Also by optionally depositing other function keys on the opposite side as shown in Fig. 19, the display can be enlarged on the whole front surface. Or a size of the cellular phone can be further decreased.

Also a device having a character input function and provided with the input method and input device of the present invention may be so designed as to be separated into an another device (separate type) from a display device (or a device only having a display and phone communication function). In conventional character input devices, pressing buttons are not arranged suitably for input of characters, and therefore there is a case where input cannot be carried out unless the positions of the buttons are recognized. The conventional devices are not suitable as a separate type device. In the input method and input device of the present invention, input can be carried out viewing the display without seeing the input device, and therefore there arises no inconvenience even if the input device is so designed as to be a separate type. The separate type is advantageous for input of characters and also for playing games.

Mentioned above is explanation of the input method and input device of the present invention which are applied to mobile devices such as cellular phones. Since operations of the input method and input device of the present invention can be carried out only with one finger or two fingers and the input can be carried out viewing the display, it is possible for the aged who are not familiar with Ten-Key Arrangement and key board or for physically handicapped persons to easily input characters. The input method and input device of the present invention can be suitably applied to an input terminal which is required to input various characters or can input various characters.

The above-mentioned explanation was made on the assumption that the character input switches are usual pressing buttons, and there is no problem with a shape and operation theory of the switch as far as the switch is capable of turning on and off. Accordingly any of lever switch and touch switch may be used.

The second invention relates to the input method and input device which can further decrease the number of switches necessary for input and can further increase the number of characters and symbols which can be easily input.

The second invention is characterized by classifying characters and/or symbols into groups according to the following classification.

Small groups: Groups consisting of at most m of characters and/or symbols, respectively.

Sets of small groups: A set comprising classified small groups having relation with each other. Representative characters and/or symbols representing each small group may be determined beforehand.

Medium groups: Groups consisting of at most m of sets of small groups, respectively.

Sets of medium groups: A set comprising classified medium groups having relation with each other.

The number "m" in the second invention is smaller than the number "n", and is preferably 5. Namely only one switch set of the first invention is used.

Concretely classification of groups is as mentioned below (in case of m=5).
In case of the "あ" family (sets of small groups):

"Small group": One small group comprises five capital characters of "あ", "い", "う", "え" and "お" and another small group comprises five small characters of "ぁ", "ぃ", "ぅ", "ぇ" and "ぉ".

"Sets of small groups": On the assumption that the small group of capital characters has a relation with the small group of small characters, those small groups are assumed to be sets of small groups of the "あ" family, and "あ" is assumed to be a representative character.

"Medium group": The sets of small groups classified as mentioned above and having a relation with each other (representative characters: "あ", "か", "さ", "た", "な", "は", "ま", "や", "ら" and "わ") are divided into two groups five by five. One group is a medium group comprising representative characters of "あ", "か", "さ", "た" and "な", and another one is a medium group comprising representative characters of "は", "ま", "や", "ら" and "わ".

"Sets of medium groups": A mass of medium groups.

Also in case of the "な" family (sets of small groups), one small group comprises five capital characters, and another small group comprises characters "にゃ", "にゅ" and "にょ". Those small groups may make sets of small groups of the representative character "な".

Further in the second invention, it is possible that in the "は" family, a group of representative character "は" is classified into sets of small groups (six small groups) of capital characters "は" to "ほ", sonant characters "ば" to "ぼ", p-sound characters "ぱ" to "ぽ", characters "ひゃ" to "ひょ", characters "びゃ" to "びょ" and characters "ぴゃ" to "ぴょ". Therefore it is possible to increase the number of characters which can be input viewing the display with the eyes. It is a matter of course that the group (sets of small groups of "は") of the "は" family may comprise a small group of capital characters "は" to "ほ" (five characters) and a small group of characters "ひゃ" to "ひょ" (three characters), and a sonant/p-sound button may be provided like the first invention.

In the second invention, a switch (set) basically having the following four selection/decision functions is used. In this case, one switch may be used commonly for those four functions.

Medium group selection switch: A switch for selecting, from sets of medium groups, a medium group including sets of small groups including a character to be input.

Switch for selecting sets of small groups: A switch for selecting the sets of small groups in the medium group.

Small group selection switch: A switch for selecting a small group from the sets of small groups.

Character decision switch: A switch for deciding the character in the selected small group.

Operations and displays are then concretely explained according to Fig. 20 to Fig. 24 with respect to the case of input of a character "にゅ".

Fig. 20 is a plan view of one embodiment of the second invention, and the same numerals as in Fig. 1 represent the same ones as in Fig. 1. Therein only one switch set 21 is used. The selection button 22 also has the functions of the input mode selection button 4 of the first invention. The structure and functions of the switch set 21 may be the same as in the first invention.

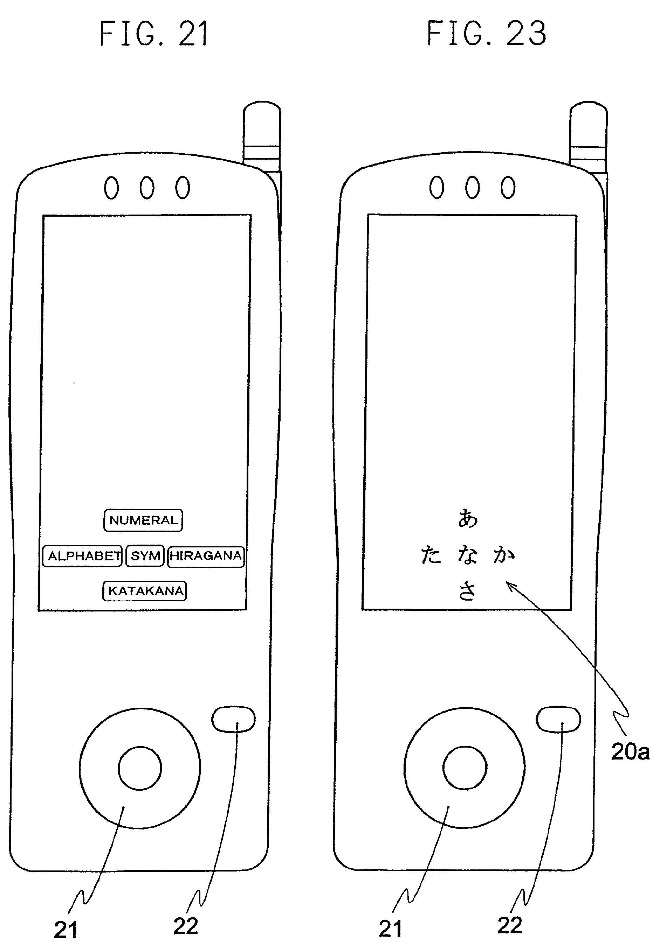

Concretely first by turning on the power button 2 of the cellular phone 1, an initial indication appears on the display 3. The selection button 22 is in the input mode selection position in an initial state. When the selection button 22 is turned on by turns, characters and symbols which can be input appear on the display 3 in order of "numeral", "hiragana", "katakana", "alphabet" and "symbol". It is a matter of course that a list of the input modes may be displayed with the selection button 22 or menu button 5. Further as shown in Fig. 21, those input modes may be assumed to be five large groups which can be selected with the five-contact switch set 21 mentioned hereinafter.

Then the "hiragana" input is selected. By selecting the "hiragana" input, there appears, on the left side of the display 3, a medium group indication 20a of the medium groups comprising sets of the small groups "あ", "か", "さ" and "た" arranged clockwise and sets of the small groups "な" arranged at the center, and also there appears, on the right side of the display 3, a medium group indication 20b of the medium groups comprising sets of the small groups "は", "ま", "や" and "ら" arranged clockwise and sets of the small groups "わ" arranged at the center. Those indications 20a and 20b correspond to the pressing buttons (switches for selecting sets of small groups) of the switch set key 21.

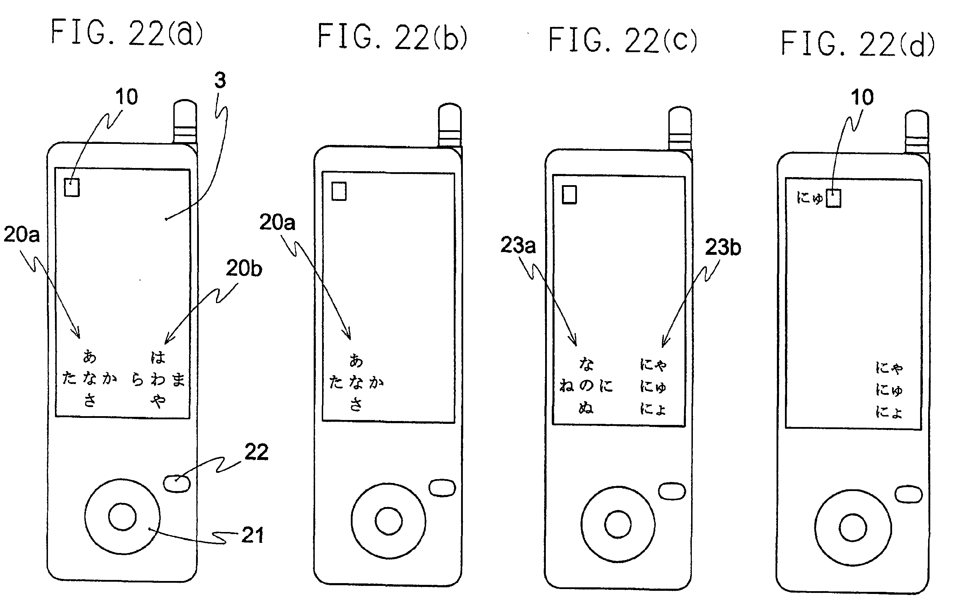

Explained below are input procedures for the character "にゅ" in accordance with Fig. 22.

Fig. 22 is an initial indication when the hiragana input is selected. On the display 3, there are a cursor 10 and the two medium group indications 20a and 20b.

Then since the sets of small groups of "な" including the character "にゅ" is in the medium group indication 20a, by pressing the selection button 22 once, the medium group indication 20a is selected (Fig. 22(b)). The switching function at that time is called a function of medium group selection switch. When the medium group indication 20b is intended to be selected, the selection button 22 may be pressed twice. In that case where the indication 22a is selected, as shown in Fig. 22(b), only the medium group indication 20a may remain on the display or only the medium group indication 20a may be in an active state (or in a reversed state, etc.)

with the medium group indication 20b left on the display. Also when the medium group indication 20a is ready for input in the state shown in Fig. 22(a), the selection of the sets of small groups in the medium group can be carried out without pressing the selection button 22, and when the medium group indication 20b is selected, the pressing button 22 may be pressed once.

Then the group "な" to which the character "にゅ" belongs is selected by pressing the switch positioned at the center of the switch set 21 having the same arrangement as the display. The switching function at that time is called a function of the switch for selecting the sets of small groups.

By selecting the group "な", as shown in Fig. 22(c), there appear, on the display, two small groups belonging to the group "な", that is, the small group indication 23a (five characters "な" to "の") and the small group indication 23b (three characters "にゃ" to "にょ").

On that display, the small group indication 23b having the character "にゅ" is selected by pressing the selection button 22 twice. The switching function at that time is called a function of the small group selection switch.

By selecting the small group indication 23b with the small group selection switch, as shown in Fig. 22(d), there appear only the small group indication 23b on the display. It is a matter of course that the small group indication 23a may be left on the display as mentioned above.

Then the character "にゅ" is decided by pressing the position on the switch set 21 (a lower switch of the switch set 21) which corresponds to the display. This switching function at that time is called a function of the character decision switch.

The character "にゅ" decided by pressing the character decision switch appears before the cursor 10 (Fig. 22(d)).

According to the second invention, irrespective of a decrease in the number of switches, the character "にゅ" can be input only by pressing the switch five times after entering into the hiragana input mode.

In Fig. 20, two medium groups appear on the display 3 at the same time. As shown in Fig. 23, only one medium group indication 20a may appear on the display 3 and the medium group indication may be changed alternately by pressing the selection button 22 by turns. Also the selection button 22 may be so designed as to be switched by degrees of pushing, and thus the selection of the display may be carried out by a degree of the pushing strength.

Further a lever switch (joy stick) and a direction key (the both are not illustrated) may be used instead of the selection button 22. Thus the selection of the medium group and small group can be carried out by a direction of the lever (a pressing direction of the direction key). In that case, the selection can be carried out only by one lever operation even if the number of medium groups and/or the number of small groups are increased. When the lever switch is used, the above-mentioned character "にゅ" can be input by four lever operations in total because the small group indication 23b can be selected by one lever operation. Also as mentioned above, when the "は" family is classified into six small groups, the lever switch may have six contacts, and further a dial type switch may be used.

Further the switch set 21 may have all the four switching functions and the function of input mode selection switch (a switch for selecting a large group) without providing the selection switch 22.

Also if the center button of the switch set 21 is changed to a switch (such as a small lever switch) which not only can be pressed but also can be moved right and left (and if necessary, upward and downward), the selection switch 22 may not be provided.

Further when the sonant characters and p-sound characters are classified into small groups, the sonant button 8 can be omitted.

As mentioned above, various selections and combinations of the switches can be employed and may be changed by means known to a person skilled in the art as far as the switching functions of the present invention are satisfied.

According to the second invention, input operations can be carried out by one switch set which exercises its power over input with small-sized mobile communication devices such as a cellular phone which require one-hand operation. Also a decrease in the number of switches can make it possible to enlarge a display panel.

Also even in case of the cellular phone shown in Fig. 24 which is generally used, the second invention can be applied by changing the direction key to a five-contact seesaw key while leaving the Ten-Key Arrangement as they are.

INDUSTRIAL APPLICABILITY

According to the present invention, it is possible to input characters and/or symbols easily and quickly viewing a display.

**Claims**

1. A method of input of characters and/or symbols, which comprises classifying the characters and/or symbols into at most n of small groups consisting of at most n of the characters and/or symbols; assigning the respective small groups to at most n of the small group selection switches; allowing at most n of the characters and/or symbols assigned to the small group selection switch to correspond to at most n of character decision switches by turning on one of the small group selection switches; and turning on once the character decision switch corresponding to the intended character and/or symbol to be selected.

2. The method of Claim 1 which comprises displaying a representative character and/or representative symbol of each small group in the arrangement corresponding to the arrangement of the small group selection switches; turning on the small group decision switch including the intended character and/or symbol to be input; displaying the characters and/or symbols in the selected small group in the arrangement corresponding to the arrangement of the character decision switches; and turning on the character decision switch to input the intended character and/or symbol.

3. The method of Claim 1 or 2, wherein a switch set having at most n of switches is used commonly for the small group selection switches and for the character decision switches, respectively, n is 10 and five each of switches are deposited crosswise.

4. The method of any of Claims 1 to 3 wherein there is at least one of the small groups including from 6 to 10 characters and/or symbols.

5. A device for input of character and/or symbols having a set of switches common to small group selection switches and character decision switches, which comprises:

   two switch sets having five switches, respectively arranged crosswise,
   means for displaying a representative character and/or representative symbol of a small group comprising at most ten of characters and/or symbols corresponding to each switch of the switch sets or for displaying all the characters and/or symbols in the arrangement of the switches,
   means for displaying, when one of the small group selection switches including the intended character and/or symbol to be input is turned on, the characters and/or symbols of the small group corresponding to the small group selection switches in the arrangement of the character decision switches, and
   means for displaying the character and/or symbol decided by turning on the character decision switch corresponding to the intended character and/or symbol to be input.

6. The input device of Claim 5, wherein numerals of from 0 to 9 are assigned to each switch.

7. The input device of Claim 5 or 6, wherein the switch set is a seesaw type pressing switch having five contacts.

8. An input method of characters and/or symbols classified into small groups, sets of small groups, medium groups and sets of medium groups according to the classification mentioned below, said method comprises:

    selecting one group of the medium groups from the sets of medium groups by a medium group selection switch,
    selecting one set of the sets of small groups in the selected medium group by a selection switch for selecting the sets of small groups,
    selecting one group of the small groups comprising characters and/or symbols from the selected set of small groups by a small group selection switch, and
    deciding, by a character decision switch, the intended character and/or symbol to be input in the selected small group.

    Small groups: Groups consisting of at most m of characters and/or symbols, respectively.
    Sets of small groups: A set comprising classified small groups having relation with each other. Representative characters and/or symbols representing each small group may be determined beforehand.
    Medium groups: Groups consisting of at most m of sets of small groups, respectively.
    Sets of medium groups: A set comprising classified medium groups having relation with each other.

9. The input method of Claim 8 which comprises:

    displaying the medium groups in the arrangement corresponding to the arrangement of the medium group selection switches;
    displaying, by turning on the medium group selection switch, representative characters and/or symbols of at most m of small groups in the selected medium group in the arrangement corresponding to the selection switches for selecting a set of small groups;
    displaying, by turning on the selection switch for selecting a set of small groups, the selected small groups in the set of small groups in the arrangement corresponding to the small group selection switches;
    displaying, by turning on the small group selection switch, characters and/or symbols in the selected small group in the arrangement corresponding to the character decision switches; and
    turning on the character decision switch to input the intended character and/or symbol.

10. An input device of characters and/or symbols used for the input method of Claim 8 or 9 which comprises:

    a selection switch comprising at most five switches for selecting a medium group and small group,
    one set of switch sets having five switches arranged crosswise for selecting a set of small groups and for deciding a character,
    means for displaying the medium groups comprising representative characters and/or representative symbols consisting of at most five of small groups corresponding to the medium group selection switches in the arrangement corresponding to the medium group selection switches or in the arrangement corresponding to the direction in which the medium group selection switches are pushed,
    means for displaying at most five of groups comprising small groups in the selected medium group in the arrangement corresponding to the switch for selecting a set of small groups,
    means for displaying the selected set of small groups in the arrangement corresponding to the small group selection switches or in the arrangement corresponding to the direction in which the small group selection switches are pushed,
    means for displaying at most five of characters and/or symbols of the selected small group in the arrangement corresponding to the character decision switches, and
    means for displaying the selected character and/or symbol by turning on the character decision switch corresponding to the intended character and/or symbol to be input.

11. The input device of Claim 10, wherein the switch for selecting the medium group and small group is a pressing switch and the medium group and small group are selected alternately by turning on the switch by turns.

12. The input device of Claim 10, wherein the switch for selecting the medium group and small group is a lever switch and the medium group and small group are selected by turning the lever to a specific direction.

13. The input device of any of Claims 10 to 12, wherein the same switch set is used commonly as the switch for selecting the set of small groups and the character decision switch.

14. The input device of Claim 10, wherein the same switch set is used commonly as the medium group selection switch, the switch for selecting the set of small groups, the small group selection switch and the character decision switch.

15. The input device of any of Claims 10 to 14, wherein numerals of from 0 to 9 are assigned to each switch of the switch set.

16. The input device of any of Claims 10 to 15, wherein the switch set is a seesaw type pressing switch having five contacts.

17. The input device of any of Claims 5 to 7 and 10 to 16, which is provided with Ten-Key Arrangement for input of numerals.

18. The input device of any of Claims 5 to 7 and 10 to 17, which is used for portable communication devices.

19. A cellular phone provided with the input device of any of Claims 5 to 7 and 10 to 17.

20. The cellular phone of Claim 19 which is provided with a switch set on the side of the cellular phone.

# FIG. 1

# FIG. 2

## FIG. 3

1

3

あ　　　　あ
えおい　えお　い
う　　　　う

## FIG. 4

1

3

か　　　　きゃ
けこき　　きょ
く　　　　きゅ

## FIG. 5

1

3

さ　　　　しゃ
せそし　　しょ
す　　　　しゅ

## FIG. 6

1

3

た　　　　ちゃ
てとち　　っ　ちょ
っ　　　　ちゅ

## FIG. 7

な　　　にゃ
ねのに　にょ
ぬ　　　にゅ

3　　　　　　1

## FIG. 8

ひゃ　　　は
ひょ　へほひ
ひゅ　　　ふ

3　　　　　　1

## FIG. 9

みゃ　　　ま
みょ　めもみ
みゅ　　　む

3　　　　　　1

## FIG. 10

や　　　　や
よ　　　　よ
ゆ　　　　ゆ

3　　　　　　1

FIG. 11

1

3

りゃ　　　　ら
りょ　　れ　ろ　り
りゅ　　　る

FIG. 12

1

3

、
。

わ
ん
を

# FIG.13

```
                    ┌─────────┐
                    │  START  │
                    └─────────┘
                         │
                         ▼
        ┌─────────────────────────────────────┐
        │  SELECTION OF HIRAGANA INPUT MODE    │
        └─────────────────────────────────────┘
                         │
                         ▼
        ┌─────────────────────────────────────┐
        │  "あ" FAMILY TO "わ" FAMILY ARE      │
        │  ASSIGNED TO CHARACTER INPUT SWITCHES│
        └─────────────────────────────────────┘
                         │
                         ▼
        ┌──────────────────────────────────────────┐
        │ "あ" FAMILY TO "わ" FAMILY ARE           │
        │ DISPLAYED ON A DISPLAY                    │
        └──────────────────────────────────────────┘
                         │
                         ▼
            ┌─────────────────────────┐
            │  SELECTION OF "あ" FAMILY│
            └─────────────────────────┘
                         │
                         ▼
        ┌──────────────────────────────────────────┐
        │ CAPITAL LETTERS "あ" TO "お" AND SMALL   │
        │ LETTERS "あ" TO "お" ARE ASSIGNED TO     │
        │ CHARACTER INPUT SWITCHES                  │
        └──────────────────────────────────────────┘
                         │
                         ▼
               ┌────────────────────┐
               │  SELECTION OF "お"  │
               └────────────────────┘
                         │
                         ▼
        ┌──────────────────────────────────────────┐
        │ "お" IS DISPLAYED ON UPPER SIDE OF A      │
        │ DISPLAY                                   │
        └──────────────────────────────────────────┘
                         │
                         ▼
              ◇ CONVERSION TO KANJI ? ◇───── NO ──┐
                         │ YES                     │
                         ▼                         │
            ┌────────────────────────┐             │
            │ KANJI CONVERSION MODE  │             │
            └────────────────────────┘             │
                         │                         │
                         ▼                         │
         ◇ COMPLETION OF CHARACTER INPUT ? ◇── NO ─┤
                         │ YES
                         ▼
                    ┌─────────┐
                    │   END   │
                    └─────────┘
```

FIG. 14（a）　　　FIG. 14（b）　　　FIG. 14（c）

**10**

あ　　　は
たなか　らわま
　さ　　　や

**10**

な　　　にゃ
ねのに　にょ
ぬ　　　にゅ

**10**

にゅ

あ　　　は
たなか　らわま
　さ　　　や

EP 1 280 046 A1

EP 1 280 046 A1

FIG. 15(a)

**10**

MNO
GHI JKL ABC  WXYZ PQRS
DEF        TUV

FIG. 15(b)

**10**

p               P
s    q      S    Q
r               R

FIG. 15(c)

**10**

Q

MNO
GHI JKL ABC  WXYZ PQRS
DEF        TUV

## FIG. 16

FIG. 17

EP 1 280 046 A1

# FIG. 18

# FIG. 19

# FIG. 20

## FIG. 21

NUMERAL

ALPHABET SYM HIRAGANA

KATAKANA

21 22

## FIG. 23

あ
た な か
さ

20a

21 22

FIG. 22(a)　　FIG. 22(b)　　FIG. 22(c)　　FIG. 22(d)

あ　か
た　な　か
さ

は
ら　わ　ま
や

あ　か
た　な　か
さ

な
ね　の　に
ぬ

にゃ
にゅ
にょ

にゅ

にゃ
にゅ
にょ

EP 1 280 046 A1

# FIG. 24

| INTERNATIONAL SEARCH REPORT | International application No. |
|---|---|
| | PCT/JP01/02457 |

A. CLASSIFICATION OF SUBJECT MATTER
Int.Cl$^7$  G06F 3/023, H04M 1/00

According to International Patent Classification (IPC) or to both national classification and IPC

B. FIELDS SEARCHED

Minimum documentation searched (classification system followed by classification symbols)
Int.Cl$^7$  G06F 3/023, H04M 1/00

Documentation searched other than minimum documentation to the extent that such documents are included in the fields searched
Jitsuyo Shinan Koho        1922-1996    Toroku Jitsuyo Shinan Koho  1994-2001
Kokai Jitsuyo Shinan Koho  1971-2001    Jitsuyo Shinan Toroku Koho  1996-2001

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | Microfilm of the specification and drawings annexed to the request of Japanese Utility Model Application No.64936/1986 (Laid-open No.179644/1987) (Sharp Corporation), 14 November, 1987 (14.11.87), page 5; lines 8 to 15   (Family: none) | 1,2,8,9<br>3,4,10-20 |
| Y<br>A | JP, 11-126126, A (Fujitsu Limited), 11 May, 1999 (11.05.99), Par. Nos. [0058] to [0063]   (Family: none) | 1,2,8,9<br>3,4,10-20 |

☐ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 12 June, 2001 (12.06.01) | 19 June, 2001 (19.06.01) |

| Name and mailing address of the ISA/ | Authorized officer |
|---|---|
| Japanese Patent Office | |
| Facsimile No. | Telephone No. |

Form PCT/ISA/210 (second sheet) (July 1992)